(19) Europäisches Patentamt / European Patent Office / Office européen des brevets

(11) **EP 2 835 213 B1**

(12) **EUROPEAN PATENT SPECIFICATION**

(45) Date of publication and mention
of the grant of the patent:
**26.07.2017 Bulletin 2017/30**

(21) Application number: **12873619.6**

(22) Date of filing: **05.04.2012**

(51) Int Cl.:
*B23K 35/26* (2006.01)    *B23K 35/28* (2006.01)
*B23K 35/36* (2006.01)    *B23K 35/362* (2006.01)
*B23K 35/02* (2006.01)

(86) International application number:
**PCT/JP2012/059359**

(87) International publication number:
**WO 2013/150635 (10.10.2013 Gazette 2013/41)**

(54) **SOLDER PASTE**

LÖTPASTE

PÂTE À BRASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.02.2015 Bulletin 2015/07**

(73) Proprietor: **SENJU METAL INDUSTRY CO., LTD.
Tokyo, 120-8555 (JP)**

(72) Inventors:
• **YAMAGAME, Tomohiro
Tokyo 120-8555 (JP)**

• **MINAKUCHI, Daisuke
Tokyo 120-8555 (JP)**

(74) Representative: **D Young & Co LLP
120 Holborn
London EC1N 2DY (GB)**

(56) References cited:
EP-A1- 2 223 771       GB-A- 2 376 200
GB-A- 2 376 439        JP-A- H06 315 789
JP-A- H07 155 987      JP-A- 2011 104 638
US-A1- 2011 233 768

**Description**

[TECHNICAL FIELD]

The present invention relates to flux which is mixed with a granular solder alloy to form solder paste and the solder paste. Particularly, it relates to the flux and the solder paste having a preventing effect of_an increase in the viscosity of the solder paste during storage and a preventing effect of occurrence of solder balls which are made of the solder unfused during the soldering.

[BACKGROUND]

In general, the flux used for the soldering has an effect of chemically removing any metal oxide existing on the surfaces of solder and an object to be soldered at a solder melting temperature and an effect of enabling movements of metallic elements at a boundary therebetween.

The solder paste is a complex material obtained by mixing the granular solder alloy and the flux. The solder paste is applied to a soldered portion of an electrode, a terminal or the like on a board such as a printed circuit board in a printing method or an ejection method. A soldering operation is executed by mounting a component on the soldered portion to which the solder paste is applied and by heating the board in a heating furnace called a reflow furnace for melting the solder.

In recent years, a lead-free solder that does not contain lead (Pb) has been used for an environment concern. In solder paste using a solder alloy having a composition of Sn, Ag and Cu as the lead-free solder, since Sn, Ag and Cu have higher energy of ionization and lower reactivity than those of In, the reaction between the solder alloy and an activator component in the flux is suppressed during storage of the solder paste. Therefore, an aging variation of increase in the viscosity can be suppressed during the storage of the solder paste.

On the other hand, it becomes aware that the solder strength and heat-cycle characteristics are improved by adding In to the lead-free solder. Therefore, in a case of the mounting by using the solder containing In, a joint life can be extended relative to a conventional solder so that a development of the solder material containing In has advanced.

However, in the solder paste using the solder alloy containing In as the lead-free solder, the energy of ionization of In is lower and the reactivity thereof is higher than those of Sn, Ag and Cu so that the solder alloy and an activator in the flux are reacting during the storage of the solder paste. Therefore, the aging variation of increase in the viscosity occurs during the storage of the solder paste and the solder paste is deteriorated significantly.

Generally, in the flux mixed with the solder alloy to which the high reactivate metallic element such as In is added, a countermeasure for suppressing the reaction between the solder alloy and the activator in the flux is considered by reducing the active force of the activator.

On the other hand, In is easily oxidizable so that the oxidation of the solder alloy proceeds in an environment in which the solder alloy is exposed to oxygen during an operation such as printing the solder paste. A fusibility of the solder reduces as working hours go along and a mounting quality is reduced in accordance with increase in the solder balls that are remained as ball-shaped solders that are not fused during a period of mounting chip parts.

Generally, in the flux mixed with the solder alloy to which the easily-oxidizable metallic element is added, a countermeasure for improving the capability of removing the metal oxide film is taken by increasing the active force of the activator.

However, in the flux mixed with the solder alloy to which the high reactivity metallic element such as In is added, if the active force of the activator is increased, the reaction between the solder alloy and the activator in the flux is accelerated and the deterioration of the solder paste cannot be suppressed. On the other hand, if the active force of the activator is decreased in order to suppress the reaction between the solder alloy and the activator in the flux, the capacity of removing the metal oxide is reduced so that the fusibility gets worse.

As being described hereinbefore, in the flux mixed with the solder alloy to which the high reactivity metal element such as In is added, it has been necessary to resolve the conflicting problems.

Previously, in order to suppress the deterioration of the solder paste caused by adding such high reactivity metal element and the occurrence of the solder balls caused by the decline of the fusibility of solder, any technology of adding the additive to the flux has been proposed. For example, flux to which a non-ionic organohalogen compound is added has been proposed (Refer to Patent Document 1).

[DOCUMENT FOR PRIOR ART]

[PATENT DOCUMENT]

Patent Document 1: Japanese Patent Application Publication No. 2003-1487

GB 2376200 A describes a soldering flux vehicle, and GB 2376439 A describes a method of printing a solder paste formulation onto a substrate surface, in which the vehicle includes at least one polar organic solvent.

[SUMMARY OF THE INVENTION]

[PROBLEM TO BE SOLVED BY THE INVENTION]

However, when the components of the activator are changed by adding to the flux an additive for suppressing the reaction between the solder alloy and the activator components, there is a possibility of reducing the capability of the activator that is required during the printing and soldering while using it as the solder paste.

The present invention is accomplished to resolve the these problems and an object of the invention is to provide flux and solder paste which can suppress the increase in the viscosity of the solder paste during the storage thereof and improve the fusibility of solder alloy without changing any activator components.

[MEANS FOR SOLVING THE PROBLEMS]

The inventors of this application have fused solid contents in the flux components to mix them with a solder alloy, have focused on a solvent that vaporizes by a heat during the soldering and have found a component of the solvent for suppressing the reaction between the solder alloy and the activator instead of the activator components.

The present invention relates to solder paste mixed with flux, which contains an activator and a solvent and forming solder paste by being mixed with a granular solder alloy, wherein the flux contains a solvent of monoalkyl propylene glycol series, which suppresses a reaction between metal contained in the solder alloy and organic acid contained in the activator to suppress a production of metallic salts, and wherein the solder alloy contains In; the solvent of monoalkyl propylene glycol series is butyl propylene triglycol or butyl propylene diglycol, and a contained amount of the solvent of monoalkyl propylene glycol series is equal to or more than 75 percent by mass but equal to or less than 100 percent by mass relative to a contained amount of all the solvents.

Since the solvent of monoalkyl propylene glycol series contains a least one methyl group at a side chain of a solvent molecule relative to a main chain thereof, a space occupied per molecule of the solvent is larger than that per solvent molecule in a conventionally used solvent. In addition, an OH group through which an ionized organic acid can be oriented to the solvent molecule exists at only one terminal.

Therefore, even if the organic acid composing the activator is ionized, it is difficult to orient the solvent molecule thereto and it is also difficult to solvate. Thus, in the solvent of monoalkyl propylene glycol series, a reaction of the activator is suppressed. In a non-heated storage condition of the solder paste, a reaction between the solder alloy and the activator is suppressed.

[EFFECT OF THE INVENTION]

According to the present invention, the reaction of the activator is suppressed in the solvent of monoalkyl propylene glycol series and the reaction between the solder alloy and the activator is suppressed in the non-heated storage condition of the solder paste. Therefore, the increase in the viscosity of the solder paste can be suppressed during the storage thereof and the estimated usable period of the solder paste can be extended.

In addition to the suppression of the reaction between the solder alloy and the activator in the flux during the storage of the solder paste, the capacity of removing the metal oxide film held by the activator remains so that the fusibility of the solder alloy can be maintained.

Therefore, under the condition that the solder passed is exposed to oxygen during the printing of the solder paste or the like, the fusibility of the solder can be maintained even along the working hours. The mounting quality can be improved by suppressing the occurrence of the solder balls and the working hours can be also extended.

According to the present invention, without changing the activator component in the flux, the reaction between the solder alloy and the activator can be suppressed in the storage condition of the solder paste and the fusibility of the solder can be maintained during the heating. Therefore, as the activator, the composition thereof having the capacity of removing the metal oxide film or the like that is required for the printing or soldering period when being used as the solder paste can be selected optionally according to the composition of the solder alloy.

[BRIEF DESCRIPTION OF DRAWINGS]

[FIG. 1A] FIG. 1A is a schematic diagram for showing a molecular structure example of a solvent.

[FIG. 1B] FIG. 1B is a schematic diagram for showing a molecular structure example of a solvent.
[FIG. 2A] FIG. 2A is a schematic diagram for showing a molecular structure example of a solvent.
[FIG. 2B] FIG. 2B is a schematic diagram for showing a molecular structure example of a solvent.
[FIG. 3A] FIG. 3A is a schematic diagram for showing a solvation model of an organic acid ion.
[FIG. 3B] FIG. 3B is a schematic diagram for showing a solvation model of an organic acid ion.

[MODES FOR IMPLEMENTING THE INVENTION]

Flux of the subject embodiment is composed of rosin as a solid content, a thixotropic agent, an activator, a solvent and the like and forms solder paste by being mixed with a granular solder alloy. Focusing on a molecular structure of the solvent, the flux of the subject embodiment can suppress a reaction of the activator during the storage of the solder paste and this flux contains a solvent of monoalkyl propylene glycol series.

The solvent of monoalkyl propylene glycol series suppress an ionization of an organic acid contained in the activator by the molecular structure of the solvent molecule during the storage of the solder paste so that the reaction between the solder alloy and the activator is suppressed. The_solvent of monoalkyl propylene glycol series vaporizes at a heating temperature during the soldering so that it does not block the capability of the activator during the soldering. It is preferable that the solvent of monoalkyl propylene glycol series is butyl propylene triglycol or butyl propylene diglycol in consideration of a boiling point thereof.

Previously, since flux to which an activator having a high active force with respect to a solder alloy has been added has used in solder paste, a capability of removing a metal oxide film has been improved so that the fusibility of the solder alloy has been improved. Improving the fusibility of the solder alloy has allowed to be suppressed any occurrence of solder balls in which the solder alloy not fused during the soldering has remained at a soldered portion.

On the other hand, by using the flux to which an activator having the high active force relative to the solder alloy has been added, the solder alloy has reacted on the activator in the flux during the storage of the solder paste and any aging variation, the solder paste has tended to such any aging variation that the viscosity is increased. Moreover, in a case that the reactivity of the metal contained in the solder alloy is high, the solder alloy has reacted on the activator in the flux during the storage of the solder paste and the solder paste has tended to the aging variation.

If the solder alloy reacts with the activator in the flux during the storage of solder paste, the capability of the activator for eliminating the metal oxide film has been reduced and the fusibility of the solder alloy has decayed so that it has been impossible to suppress the generation of the solder balls.

The following will describe a summary of mechanism of increasing the viscosity of the solder paste during the storage thereof.

It is conceivable that the viscosity of the solder paste is increased by the occurrence of metallic salts as a result of the reaction between the organic acid contained in the activator and the metal contained in the solder alloy.

Production of such metallic salts is shown by the following formula (1). Here, M indicates the metal contained in the solder alloy, RCOOH indicates the organic acid contained in the activator and $(RCOO)_2M$ indicates the formed metallic salts.

[FORMULA 1]

$$M + 2RCOOH \rightarrow (RCOO)_2M + H_2 \cdots \qquad (1)$$

However, in order to produce the metallic salts in accordance with the reaction of the formula (1), the organic acid should be ionized as shown in the following formula (2).

[FORMULA 2]

$$RCOOH \leftrightarrow RCOO^- + H^+ \cdots \qquad (2)$$

In order to ionize the organic acid, the organic acid ion $(RCOO^-)$ is needed to be solvated. The solvation is referred to as a process such that solvent molecules biased to a negative charge or a positive charge orient around an ion in order to cancel the charge of the individual ion having the positive charge or the negative charge that is unstable energetically. Since the solvated ion is relatively stable with respect to the individual ion, a state having a charge is maintained.

The solvent molecule has OH group (hydroxyl group) at its terminal and H of the OH group is biased to the positive charge. Since the OH group of the solvent molecule orients to the organic acid ion $(RCOO^-)$ biased to the negative charge, it is solvated.

The ionization of the organic acid (RCOOH) is a reversible reaction. Even if the organic acid (RCOOH) is ionized to an individual organic acid ion $(RCOO^-)$ and an individual hydrogen ion $(H^+)$, it will return to the organic acid (RCOOH) again when the ion is not solvated. Therefore, the metallic salts are suppressed to be produced in an environment in which it is hard to be solvated.

However, in an environment easily solvated, the solvent molecules orient to the organic acid ion (RCOO⁻) and the condition thereof having the charge is maintained. At that time, if there is the metallic element such as In having any low energy of ionization in the solder alloy, the ionized metal (M⁺) tends to react with the organic acid ion (RCOO⁻) so that it is impossible to suppress the occurrence of the metallic salts.

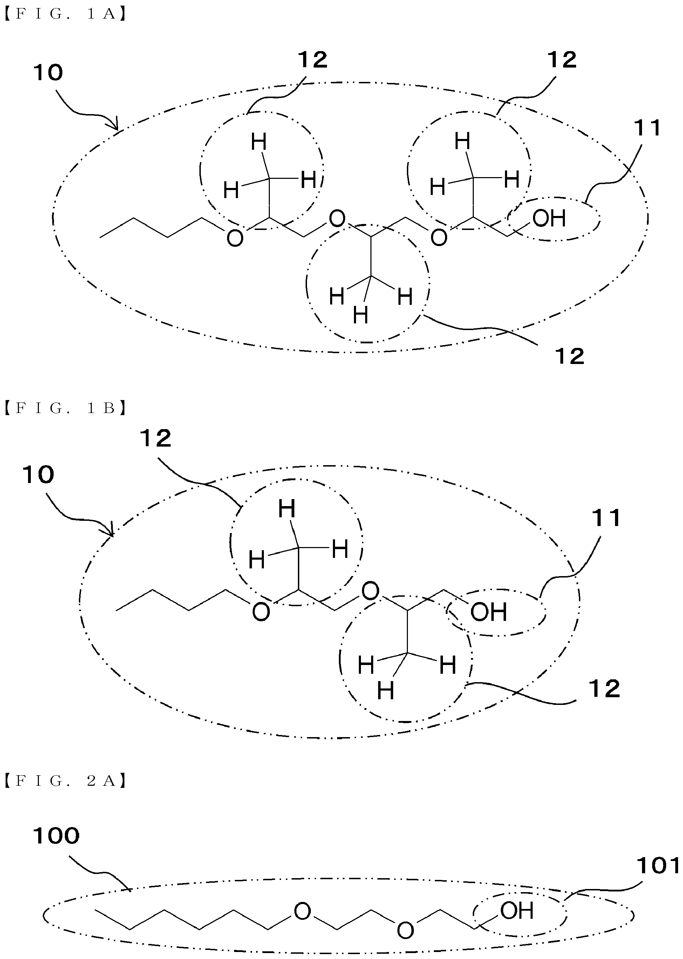

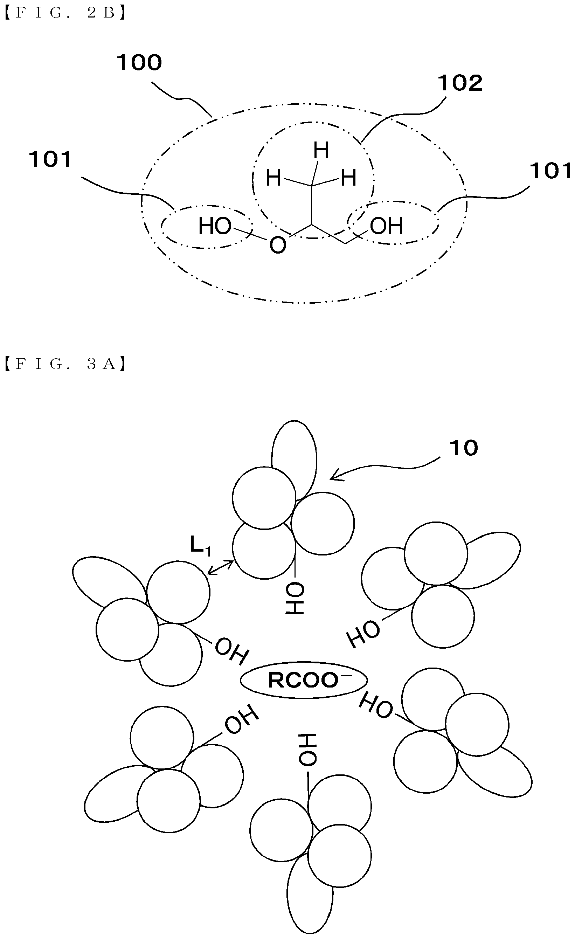

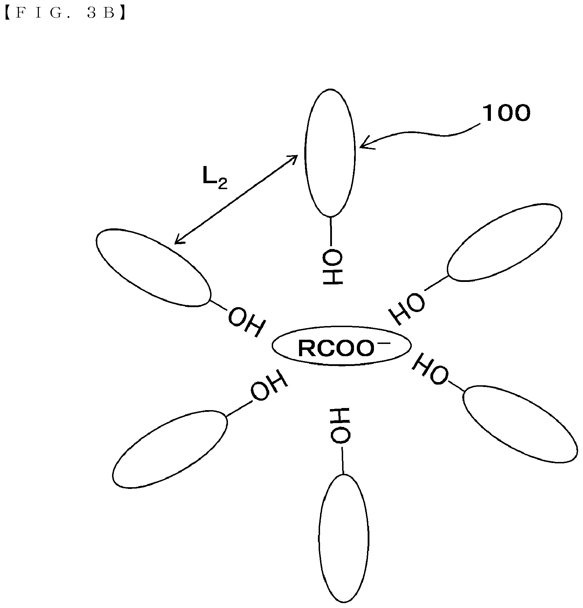

FIGS. 1A and 1B and also FIGS. 2A and 2B are schematic diagrams for showing molecular structure examples of the solvents and FIGS. 3A and 3B are schematic diagrams for showing solvation models of the organic acid ions. Although the solvent of glycol series has been conventionally used in the flux, the conventionally used solvent of diethylene glycol series has a molecular structure that is a long-chain and has the OH group 101 at a terminal and in which a space occupied per molecule of the solvent is relatively small, as shown in FIG. 2A.

Therefore, as shown in FIG. 3B, when the solvent molecule 100 attempts to orient to the organic acid ion (RCOO⁻), a repelling force between the solvent molecules 100 weakens because a distance $L_2$ between the solvent molecules 100 is long. Therefore, the organic acid ion (RCOO⁻) is ease to be solvated.

In the condition that the organic acid ion (RCOO⁻) is ease to be solvated, the organic acid (RCOOH) is ease to be ionized and it is impossible to suppress the occurrence of the metallic salts so that it is conceivable that the viscosity of the solder paste increases.

On the other hand, since the solvent of monoalkyl propylene glycol series has a molecular structure having the OH group 11 at the terminal and at least one methyl group (CH₃-) 12 at the side chain, the space occupied per molecule of the solvent is larger than that of the solvent of diethylene glycol series. As the solvent of monoalkyl propylene glycol series, the butyl propylene triglycol has three methyl groups 12 as shown in FIG. 1A and the butyl propylene diglycol has two methyl groups 12 as shown in FIG. 1B.

Therefore, even if the solvent of monoalkyl propylene glycol series molecule 10 attempts to orient to the organic acid ion (RCOO⁻) as shown in FIG. 3A, the repelling force between the solvent molecules 10 increases because the space occupied per_molecule of the solvent is large and the distance $L_1$ between the solvent molecules is short. Thus, the organic acid ion (RCOO⁻) is hard to be solvated.

In the condition that the organic acid ion (RCOO⁻) is hard to be solvated, it is difficult that the organic acid (RCOOH) is ionized and it is possible to suppress a production of the metallic salts. As being described, because the reaction between the solder alloy and the activator in the flux can be suppressed during the storage of the solder paste owing to the molecular structure of the solvent molecule 10, it is possible to accomplish the effect of suppressing any increase in the viscosity of the solder paste.

Since the reaction between the solder alloy and the activator in the flux is suppressed during the storage of the solder paste and the capability of the activator for removing the metal oxide film is maintained, the fusibility of the solder alloy can be maintained. Therefore, the molecular structure of the solvent molecule 10 allows the reaction between the solder alloy and the activator in the flux to be suppressed during the storage of the solder paste so that the occurrence of the solder balls can be suppressed too.

It is also conceivable that as the solvent having the methyl group 102, propylene glycol is used. However, since the propylene glycol has a molecular structure wherein the OH groups 101 through which the solvent molecule can orient to the ionized organic acid exist at the both terminals as shown in FIG. 2B, the organic acid ion (RCOO⁻) is ease to be solvated so that it is impossible to accomplish any enough effect of suppressing increase in the viscosity of the solder paste.

On the other hand, in the solvent of monoalkyl propylene glycol series, the OH group 11 through which the solvent molecule can orient to the ionized organic acid exists only one terminal as shown in FIG. 1A and FIG. 1B.

Therefore, the organic acid ion (RCOO⁻) is hard to be solvated and an arrangement of OH group also allows the effect of suppressing any increase in the viscosity of the solder paste to be accomplished.

Here, it is conceivable that butyl propylene (mono) glycol is used as the solvent of monoalkyl propylene glycol series. The flux using the butyl propylene glycol as the solvent also can suppress the reaction between the solder alloy and the activator in the flux during the storage of the solder paste.

However, the butyl propylene glycol has the boiling point lower than those of the butyl propylene diglycol and the butyl propylene triglycol and there is a possibility that the viscosity change of the solder paste occurs in accordance with the vaporization of the solvent components thereof. Therefore, it is preferable that the solvent of monoalkyl propylene glycol series is the butyl propylene diglycol or the butyl propylene triglycol.

Here, all the solvent in the flux may be the solvent of monoalkyl propylene glycol series. However, even if all the solvent in the flux is not the solvent of monoalkyl propylene glycol series, the reaction between the solder alloy and the activator in the flux can be suppressed during the storage of the solder paste.

However, in accordance with a ratio of the solvent having a conventional component to the solvent of monoalkyl propylene glycol series, there is change in the viscosity rate of the solder paste and the presence or absence of occurrence of the solder balls. Therefore, it is preferable that the ratio of the solvent of monoalkyl propylene glycol series to all the solvent in the flux is equal to or more than 75% but equal to or less than 100% in percent by mass.

[EMBODIMENTS]

By preparing fluxes of embodiments and comparison examples by reference to compositions shown in the following tables and also preparing solder pastes by using the fluxes of the embodiments and the comparison examples, they were compared with each other regarding the effect of suppressing the increase in the viscosity of the solder paste during the storage thereof and the effect of suppressing the occurrence of the solder balls during the soldering.

The fluxes of the embodiments and the comparison examples were prepared by reference to the composition shown in the following table 1. The composition rate in the table 1 is based on percent by mass. The fluxes of the embodiments and the comparison examples prepared by reference to the composition shown in the table 1 were mixed with the granular solder alloy having a predetermined grain diameter (composition: Sn-3Ag-3Bi-3In) to prepare the solder paste. It is to be noted that the composition of the solder alloy described by Sn-3Ag-3Bi-3In is Ag (silver) of 3%, Bi (bismuth) of 3%, In (indium) of 3% and the remnant of Sn (tin) in the percent by mass.

[TABLE 1]

| Materials | Composition (%) |
|---|---|
| rosin | 35 |
| Solvent | 50 |
| organic acid | 10 |
| Amine | 2 |
| phenol type antioxidant | 3 |

In a case that the solvent shown in the table 1 in each of the fluxes was any of butyl propylene triglycol, butyl propylene diglycol, butyl triglycol, and hexyl diglycol, the following table 2 shows the variations of the viscosity rate. The viscosity rate can be calculated from the following formula (3).

[TABLE 2]

| Solvent | Viscosity Rate (%) | |
|---|---|---|
| | 7-day cool storage | 30-day cool storage |
| butyl propylene triglycol | +1.9 | +2.8 |
| butyl propylene diglycol | +2.7 | +4.7 |
| butyl triglycol | +9.8 | +22.7 |
| hexyl diglycol | +10.3 | +18.2 |

[FORMULA 3]

$$\text{Viscosity rate (\%)} = \frac{(\text{viscosity after cool storage}) - (\text{viscosity just after manufacturing})}{\text{viscosity just after manufacturing}} \times 100 \cdots (3)$$

Here, the viscosity was measured by using a viscometer, model PCU-205 manufactured by Malcom Co., Ltd. The measurement method was compliant with JIS Z 3284.

The following table 3 shows a number of occurrence for the solder balls during a reflow using the solder paste in cases of using any of the butyl propylene triglycol, the butyl propylene diglycol, the butyl triglycol and the hexyl diglycol as the solvent in the fluxes shown in the table 1. The reflow condition was air reflow and the number of the balls occurred around a chip capacitor was counted under a condition that a preliminary heating temperature was 175 °C, a preliminary heating time was 90 seconds, a main heating temperature was equal to or higher than 220 °C with 245 °C as a peak temperature and a main heating time was 25 seconds.

[TABLE 3]

| Solvent | Number of Solder Balls | | |
|---|---|---|---|
| | Early stage of manufacture | After Printing for 12 hours | Increase and Decrease |
| Butyl propylene triglycol | 0 | 0 | ±0 |
| Butyl propylene diglycol | 2 | 5 | +3 |
| Butyl triglycol | 3 | 75 | +72 |
| Hexyl diglycol | 2 | 145 | +143 |

Focusing on the viscosity rate of the solder paste, it is understood from the result of the table 2 that the viscosity rate can be suppressed to a low value less than 5% in the case of the 7-day cool storage of the solder paste and in the case of the 30-day cool storage when the butyl propylene triglycol or the butyl propylene diglycol is used as the solvent in the flux with respect to the solder alloy to which In is added.

On the other hand, it is understood that the viscosity rate increases by the order of 10 % at the stage of the 7-day cold storage of the solder paste and the viscosity rate increases by the order of 20 % at the stage of the 30-day cold storage of the solder paste when the butyl triglycol or the hexyl diglycol is used as the solvent.

Focusing on the number of occurrence of the solder balls, it is understood from the result of the table 3 that the number of the solder balls is up to the order of 5 at just after the manufacture of the solder paste and after the solder paste has been used for the printing for 12 hours and the increased number of the solder balls is suppressed to a low value less than 5 after repeating the printing of the solder paste when the butyl propylene triglycol or the butyl propylene diglycol is used as the solvent.

On the other hand, it is understood that the number of the solder balls is suppressed less than 5 at just after the manufacture of the solder paste but the number of the solder balls is significantly increased after the solder paste has been used for the printing for 12 hours when the butyl triglycol or the hexyl diglycol is used as the solvent.

From the above results, when the butyl propylene triglycol is selected as the solvent having the components available to the preventing effect of the increase in the viscosity of the solder paste during the storage and the preventing effect of the occurrence of the solder balls in the soldering and the hexyl diglycol is selected as the conventional solvent, the following table 4 shows the variation of the viscosity rate when changing the ratio of the effective solvent to the conventional solvent. In the table 4, the viscosity rate variation less than 5% is regarded as "good" labeled as a level "O", the variation of 5-10% is regarded as "slightly good" labeled as a level "Δ" and the variation over 10% is regarded as "bad" labeled as a level "x".

The following table 5 shows the number of occurrence of the solder balls when changing the above-discussed ratio of the effective solvent to the conventional solvent. In the table 5, the number of occurrence of balls less than +10 is regarded as "good" labeled as a level "O" and the number of occurrence over +10 is regarded as "bad" labeled as a level "x". The solvent rates in the tables 4 and 5 are represented by "percent by mass".

[TABLE 4]

| | Solvent Rate (%) | | Viscosity Rate (%) | | Level |
|---|---|---|---|---|---|
| | Effective Solvent | Conventional Solvent | 7-day Cold Storage | 30-day Cold Storage | |
| Embodiment 1 | 100 | 0 | +1.9 | +2.8 | O |
| Embodiment 2 | 75 | 25 | +1.5 | +2.0 | O |
| Comparison Example 1 | 50 | 50 | +1.0 | +6.1 | Δ |
| Comparison Example 2 | 25 | 75 | +3.1 | +10.3 | x |
| Comparison Example 3 | 0 | 100 | +10.3 | +18.2 | x |

[TABLE 5]

| | Solvent Rate (%) | | Number of Solder Balls | | | Level |
|---|---|---|---|---|---|---|
| | Effective Solvent | Conventional Solvent | Early Stage of Manufacture | After Printing for 12 hours | Increase and Decrease | |
| Embodiment 1 | 100 | 0 | 0 | 0 | ±0 | O |
| Embodiment 2 | 75 | 25 | 2 | 9 | +7 | O |
| Comparison Example 1 | 50 | 50 | 4 | 30 | +26 | x |
| Comparison Example 2 | 25 | 75 | 2 | 32 | +30 | x |
| Comparison Example 3 | 0 | 100 | 2 | 145 | +143 | x |

Focusing on the viscosity rate of the solder paste, as shown in the embodiment 1 of the table 4, it is understood that the viscosity rate is suppressed to the low value less than 3 percent by mass in the case of the 7-day cold storage of the solder paste and also the 30-day cold storage when the rate of the butyl propylene triglycol as the effective solvent is 100 percent by mass.

As shown in the example 2 of the table 4, it is understood that the viscosity rate is suppressed to the low value less than 2 percent by mass in the case of the 7-day cold storage of the solder paste and also the 30-day cold storage when the rate of the butyl propylene triglycol as the effective solvent is 75 percent by mass and the rate of the hexyl diglycol as the conventional solvent is 25 percent by mass.

On the other hand, as shown in the comparison example 1 in the table 4, the viscosity rate is suppressed to the low value in the case of the 7-day cold storage of the solder paste but the viscosity rate has a tendency toward the increase in the 30-day cold storage when the rate of the butyl propylene triglycol as the effective solvent is 50 percent by mass and the rate of the hexyl diglycol as the conventional solvent is 50 percent by mass.

Moreover, as shown in the comparison example 2 and the comparison example 3 in the table 4, it is understood that the viscosity rate exceeds 10% when the ratio of the butyl propylene triglycol as the effective solvent is reduced and any occurrence of the aging variation is confirmed.

Focusing on the number of occurrence for the solder balls, as shown in the embodiment 1 of the table 5, there is no occurrence of the solder balls at just after the manufacture of the solder paste and after the solder paste has been used for the printing for 12 hours when the rate of the butyl propylene triglycol as the effective solvent is 100 percent by mass.

In addition, it is understood as shown in the embodiment 2 of the table 5 that the number of the solder balls is few on the order of 2 at just after the manufacture of the solder paste, the number of the solder balls is on the order of 9 after the solder paste has been used for the printing for 12 hours and the increase in the number of the balls is suppressed to the number less than 10 after the repeated printing of the solder paste when the rate of the butyl propylene triglycol as the effective solvent is 75 percent by mass and the rate of the hexyl diglycol as the conventional solvent is 25 percent by mass.

On the other hand, it is understood as shown in the comparison example 1 of the table 5 that the number of the solder balls is few at just after the manufacture of the solder paste but the number of solder balls is significantly increased after the solder paste has been used for the printing for 12 hours when the rate of the butyl propylene triglycol as the effective solvent is 50 percent by mass and the rate of the hexyl diglycol as the conventional solvent is 50 percent by mass.

Similarly, it is understood as shown in the comparison example 2 and the comparison example 3 of the table 5 that the number of the solder balls is significantly increased after the repeated printing of the solder paste when the rate of the butyl propylene triglycol as the effective solvent is reduced.

Therefore, focusing on the viscosity rate of the solder paste, it is preferably understood that the ratio of the solvent of monoalkyl propylene glycol series to all the solvent in the flux is equal to or more than 50% but equal to or less than 100% in percent by mass. Focusing on the viscosity rate of the solder paste as well as the number of the solder balls after the repeated printing of the solder paste, it is preferably understood that the ratio of the solvent of monoalkyl propylene glycol series to all the solvent in the flux is equal to or more than 75% but equal to or less than 100% in percent by mass.

It is understood that the increase in the viscosity can be suppressed even in the case of the 30-day cold storage of the solder paste when the rate of the solvent of monoalkyl propylene glycol series to all the solvent in the flux is equal to or more than 75 percent by mass but equal to or less than 100 percent by mass so that the period of use for the solder paste can be extended.

Since the fusibility of the solder does not reduce and the occurrence of the solder balls can be suppressed even after the solder paste has been used for the printing for 12 hours, it is understood that the mounting quality is improved and the working hours can be extended.

[INDUSTRIAL AVAILABILITY]

The present invention is preferably applicable to the flux which is mixed with the solder alloy to which the high reactive metal elements such as In, Bi, Zn or the like are added to form it.

## Claims

1. Solder paste mixed with flux, which contains an activator and a solvent, and a granular solder alloy, wherein the flux contains a solvent of monoalkyl propylene glycol series, which suppresses a reaction between metal contained in the solder alloy and organic acid contained in the activator to suppress a production of metallic salts, wherein the solder alloy contains In;
the solvent of monoalkyl propylene glycol series is butyl propylene triglycol or butyl propylene diglycol; and
the contained amount of the solvent of monoalkyl propylene glycol series is equal to or more than 75% by mass but equal to or less than 100% by mass relative to a contained amount of all the solvent.

## Patentansprüche

1. Lötpaste, gemischt mit Flussmittel, das einen Aktivator und ein Lösungsmittel enthält, und einer körnigen Lötlegierung, wobei
das Flussmittel ein Lösungsmittel der Monoalkylpropylenglykol-Reihe enthält, das eine Reaktion zwischen in der Lötlegierung enthaltenem Metall und in dem Aktivator enthaltener organischer Säure unterdrückt, um die Bildung von Metallsalzen zu unterdrücken, wobei
die Lötlegierung In enthält;
es sich bei dem Lösungsmittel der Monoalkylpropylenglykol-Reihe um Butylpropylentriglykol oder Butylpropylendiglykol handelt und
die enthaltene Menge des Lösungsmittels der Monoalkylpropylenglykol-Reihe größer gleich 75 Massen-%, aber kleiner gleich 100 Massen-%, bezogen auf eine enthaltene Menge des gesamten Lösungsmittels, ist.

## Revendications

1. Pâte à braser mélangée à un fondant, qui contient un activateur et un solvant, et un alliage à braser granulaire, le fondant contenant un solvant de la série monoalkylpropylène glycol, qui supprime une réaction entre un métal contenu dans l'alliage à braser et un acide organique contenu dans l'activateur pour supprimer une production de sels métalliques, dans laquelle
l'alliage à braser contient de l'In ;
le solvant de la série monoalkylpropylène glycol est le butylpropylène triglycol ou le butylpropylène diglycol ; et
la quantité contenue du solvant de la série monoalkylpropylène glycol est égale ou supérieure à 75 % en masse, mais égale ou inférieure à 100 % en masse, rapporté à une quantité contenue de tout le solvant.

【FIG. 1A】

【FIG. 1B】

【FIG. 2A】

【F I G. 2 B】

【F I G. 3 A】

【FIG. 3B】

**EP 2 835 213 B1**

## REFERENCES CITED IN THE DESCRIPTION

**Patent documents cited in the description**

- JP 2003001487 A
- GB 2376200 A
- GB 2376439 A